# EUROPEAN PATENT SPECIFICATION

(11) **EP 1 611 570 B1**
(45) Date of publication and mention of the grant of the patent: **28.06.2017**
(21) Application number: 04724340.7
(22) Date of filing: 30.03.2004
(51) Int. Cl.: G10L 15/26, G10L 15/22

(54) **SYSTEM FOR CORRECTION OF SPEECH RECOGNITION RESULTS WITH CONFIDENCE LEVEL INDICATION**
SYSTEM ZUR KORREKTUR VON SPRACHERKENNUNGSERGEBNISSEN MIT ANZEIGE DES KONFIDENZNIVEAUS
SYSTEME DE CORRECTION DES RESULTATS DE LA RECONNAISSANCE DE LA PAROLE A INDICATION DU NIVEAU DE CONFIANCE

(30) Priority: 31.03.2003 EP 03100853
(43) Date of publication of application: 04.01.2006
(73) Proprietor: Nuance Communications Austria GmbH, 1101 Wien (AT)
(72) Inventor: STANGLMAYR, Klaus, A-1101 Vienna (AT)
(74) Representative: Driver, Virginia Rozanne
(86) International application number: PCT/IB2004/050360
(87) International publication number: WO 2004/088635

(56) References cited:
- EP-A- 1 262 954
- WO-A-01/46853
- WO-A-02/09093
- WO-A-03/038808
- US-A1- 2002 128 833

## Description

The invention relates to a correction device for correcting text passages in a recognized text information which recognized text information is recognized by a speech recognition device from a speech information and which is therefore associated to the speech information.

The invention further relates to a correction method for correcting text passages in a recognized text information which recognized text information is recognized by a speech recognition device from a speech information and which is therefore associated to the speech information.

The invention also relates to a computer program product which comprises correction software of word correction software which is executed by a computer.

Such a correction device and such a correction method are known e.g. from document WO 01/46853 A and US-A-6,173,259. The latter known correction device is realized by means of a computer executing a word processing software of a corrector of a transcription service. The corrector is an employee that manually corrects text information which text information is recognized from speech information automatically with a speech recognition program.

The speech information in this case is a dictation generated by an author which dictation is transmitted to a server via a computer network. The server distributes received speech information of dictations to various computers of which each execute speech recognition software constituting a speech recognition device in this case.

The known speech recognition device recognizes text information from the speech information of the dictation by the author sent to it, with link information also being established. The link information marks for each word of the recognized text information, a part of the speech information for which the word was recognized by the speech recognition device. The speech information of the dictation and the recognized text information and the link information are transferred from the speech recognition device to the computer of the corrector for a correction process.

The known correction device contains synchronous playback means, by which means a synchronous playback mode can be performed. When the synchronous playback mode is active in the correction device, the speech information of the dictation is played back while, in synchronism with each acoustically played-back word of the speech information, the word recognized from the played-back word by the speech recognition system is marked with an audio cursor. The audio cursor thus marks the position of the word that has just been acoustically played-back in the recognized text information.

In the event of an unsuitable or incorrect recognized text passage picked up by the corrector, the unsuitable or incorrect recognized text passage is replaced with a different - correct respectively suitable - text passage. Such a correction work is extremely time-consuming, thereby considerably increasing costs of the transcription. On the other hand, if the quality of the recognition and correction of the recognized text should be at a maximum, the corrector has to listen to the whole sound respectively watch the whole recognized text. One of the aims, therefore, is to make the correction work following a recognition as rapid and efficient as possible with an maximum quality of the recognized respectively corrected text.

Reference is made to International Publication No. PCT/IB02/04466 which forms part of the state of the art under A. 54(3) and which provides a confidence value by marking relevant text passages based on their reliability.

It is an object of the invention to provide a correction device in accordance with the type mentioned in the first paragraph, a correction method in accordance with the type mentioned in the second paragraph and a computer program product in accordance with the type mentioned in the third paragraph in which confidence values are provided in a novel way.

In order to achieve the above-mentioned object, in such a correction device features in accordance with the invention are provided so that the correction device can be characterized by the wording of claim 1. In order to achieve the above-mentioned object, features in accordance with the invention are envisaged in such a correction method so that the correction method can be characterized by the wording of claim 4.

In order to achieve the above-mentioned object, such a computer program product includes features in accordance with the invention so that the computer program product can be characterized by the wording of claim 7. By virtue of the characteristic features of the invention, it is achieved in a relatively simple way that for example a corrector of a transcription system using a correction device according to the invention is able to make a correction work following a recognition relatively rapid and efficient thereby ensuring a best quality of the recognized or corrected text information. In particular by means of indicating the confidence level information of a text passage of the recognized text information during the synchronous playback rather then as an at once and permanent indication of the confidence value of all text passages of the text information has the advantage that the corrector can easily recognize a wrong or incorrect text passage without being diverted or concentrated on the permanent indications.

In the embodiments according to the invention, it has been proved to be very advantageous in the embodiments according to the invention when measures as claimed in claim 2 and claim 5 are provided. By changing the speed of the playback for a particular section of the dictation automatically in dependence of the confidence level information, the attention of the corrector is increased resulting in an increased accuracy of the corrected text information. For example, an automatic slow down of the playback speed may be performed for a text passage with a lower confidence level.

In the embodiments according to the invention, it has further been proved to be advantageous when measures as claimed in claim 3 and claim 6 are provided. By this the accuracy of the corrected text may further be improved.

The invention will be better understood according to the following description explaining the physical basis of the invention based on the enclosed drawing showing a preferred embodiment of the latter as a non-limitative example of implementation.

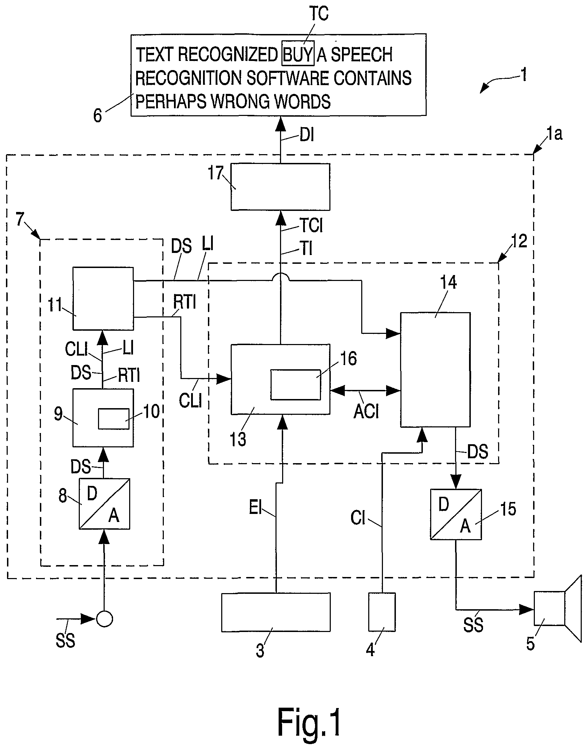

Figure 1 shows, in accordance with this invention, a correction system in form of a block diagram.

Figure 1 shows a correction system 1 which comprises a computer 1a. By means of the computer 1a speech recognition software and text processing software is executed. The correction system 1 has a speech signal input 2 and input means 3 and a foot switch 4 and a loudspeaker 5 and a screen 6 connected to it. In this case the input means 3 are realized by a keyboard and a mouse.

A speech signal SS is received at the speech signal input 2 and transferred to a speech engine 7. The speech signal SS in this case is a dictation received from a server via a network (not shown). A detailed description of receiving such a speech signal SS can be derived from document US 6,173,259 B1. The speech engine 7 contains an A/D converter 8. By means of the A/D converter 8 the speech signal SS is digitized, whereupon the A/D converter 8 transfers digital speech data DS to a speech recognizer 9.

The speech recognizer 9 is designed to recognize text information assigned to the received digital speech data DS. In the following said text information is referred to as recognized text information RTI. The speech recognizer 9 is further designed to establish link information LI which for each text passage of the recognized text information RTI marks the part of the digital speech data DS at which the text passage has been recognized by the speech recognizer 9. Such a speech recognizer 9 is known, for example, from the document US-A-5,031,113. Those skilled in the art will appreciate that the information provided by the speech recognizer 9 for each recognized text passage can be statistically analyzed. In particular, the speech recognizer 9 can provide a score indicative of the confidence level assigned by the speech recognizer 9 to a particular recognition of a particular word. These scores are analyzed by a confidence level scorer 10 of the speech recognizer 9. In the following said scores are referred to as confidence level information CLI.

The speech engine 7 also comprises memory means 11. By means of said memory means 11 the digital speech data DS transferred by the speech recognizer 9 are stored along with the recognized text information RTI and the link information LI and the confidence level information CLI of the speech signal SS.

The correction system 1 also comprises a correction device 12 for recognizing and correcting wrong or unsuitable recognized text or words. The correction device 12 is realized by the computer 1a processing the text editing software, which text editing software contains special correction software for correcting text passages of the recognized text information. Correction device 12 is further referred to as correction software 12 and contains editing means 13 and synchronous playback means 14.

The editing means 13 are designed to position a text cursor TC at a text passage that has to be changed or an incorrect text passage of the recognized text information RTI and to edit the recognized text passage in accordance with editing information EI entered by a user of the correction system 1, which user is a corrector in this case. The editing information EI in this case is entered by the user with keys of the keyboard of the editing means 3, in a generally known manner.

The synchronous playback means 14 are allowing a synchronous playback mode of the correction system 1, in which synchronous playback mode the text passage of the recognized text information RTI marked by the link information LI concerning the speech information just played back is synchronously marked during an acoustic playback of the speech information of the dictation. Such a synchronous playback mode is known, for example, from the document WO 01/46853 A1, the disclosure of which is deemed to be included in the disclosure of this document through this reference.

When the synchronous playback mode is active, audio data of the dictation which is stored in the memory means 11 as digital speech data DS can be read out by the synchronous playback means 14 and continuously transferred to a D/A converter 15. The D/A converter 15 then converts the digital speech data DS into speech signal SS. Said speech signal SS is downstream transferred to the loudspeaker 5 for acoustic playback of the dictation.

To activate the synchronous playback mode, the user of the correction system 1 can place his foot on one of two switches provided by the foot switch 4, whereupon control information CI is transferred to the synchronous playback means 14. Then the synchronous playback means 14 in addition to the digital speech data SD of the dictation also read out the link information LI stored for said dictation in the memory means 11.

In synchronous playback mode, the synchronous playback means 14 are further designed to generate and transfer audio cursor information ACI to the editing means 13. Immediately after the activation of the synchronous playback mode the editing means 13 are designed to read out the recognized text information RTI from the memory means 11 and to temporarily store it as text information TI to be displayed. Said temporarily stored text information TI to be displayed corresponds for the time being to the recognized text information RTI and may be corrected by the corrector by corrections to incorrect text passages in order to ultimately achieve error-free text information.

The text information TI temporarily stored in the editing means 13 is transferred from the editing means 13 to image processing means 17. The image processing means 17 process the text information TI to be displayed and transfer presentable display information DI to the screen 6. Said display information DI contains the text information TI to be displayed.

As already mentioned, the display process is windows-based. For the user the following is recognizable during the synchronous playback. Primary a window on the screen or display is filled with the recognized text. The recognized word corresponding to a speech segment respectively the audio data which is played back as already mentioned above is indicated by high-lighting the word on the screen. As such, the high-lighting follows the play back of the speech.

In the embodiment shown in figure 1 the editing means 13 contain indication means 16. The indication means 16 are constructed for indicating the confidence level information CLI of a text passage of the text information TI to be displayed during the synchronous playback which confidence level information CLI is received from the memory means 11. In this case the text passage is a single word. It may be observed that the confidence level of so called bigrams or trigrams or phrases of the recognized text information may be indicated.

It may further be observed that the indication means 16 may be a separate block within the correction device 12 being connected to the editing means 13 and/or the synchronous playback means 14 and receiving confidence level information CLI and audio cursor information ACI and recognized text information RTI and outputting text information TI with a confidence value indication. As an example, the indication is performed by applying a color attribute to each word which is currently "active" in the synchronous playback which means the word which is played back. A threshold level respectively a confidence limit is settable before starting the synchronous playback mode. The confidence limit may lie, for example, at 80% of a maximum confidence value range of the confidence level information CLI stored in the memory means 11. Accordingly, for each "active" word an inquiry takes place as to whether the confidence level information CLI of said word is smaller, equal to or greater than the threshold level. If the threshold level is undershot or equaled, the "active" word is marked respectively a color attribute different to a default color attribute is assigned resulting in a different color high-lighting on screen 6.

Being notified about the confidence level of a word of the text information TI just during the synchronous playback rather then as a permanent indication of the confidence value information CLI of all words in the displayed text information TI has the advantage that the corrector can easily recognize a wrong or incorrect word without being diverted or concentrated on the permanent indications.

It may be observed that other visual indications may be used to indicate a confidence level information CLI of a word when synchronous playback takes place, for example, the word may be show bold or underlined.

In the present embodiment, instead of marking the word, a separate indication at the text-window may be provided in the form of a flash-light, which flash-light indicates the confidence level information CLI respectively the confidence value of the "active" word. By this, a corrector just needs to concentrate at the flash-light in a fixed position rather than - in synchronous playback mode - following the "active" words in the text displayed and/or highlighted on screen 6.

Since a playback speed in synchronous playback mode may be comparatively fast, the playback speed may be changed automatically in dependence of the confidence level. For example, the playback speed for a word with 80% of a maximum confidence value may be reduced by half of the normal playback speed of a word with the maximum confidence value, thus correctly recognized.

It may further be observed that the indicating of the confidence level information CLI respectively the confidence value in accordance with the invention may be performed acoustically. In this case a sound signal may be generated and emitted via a loudspeaker. A different pitch or a different loudness or volume of the generated sound signal may be used to indicate a different confidence value.

It may be observed further that the indicating of the confidence level information CLI respectively the confidence value in accordance with the invention may be performed by means of vibrations. In this case additionally vibration means are provided which vibration means can be brought into a contact with the user respectively corrector and in which the corrector may feel or sense vibrations in dependence of the confidence value of a word played back in the synchronous playback mode.

As already mentioned the correction system 1 is implemented on a conventional computer, such as a PC or workstation. It should be mentioned that portable equipment, such as personal digital assistants (PDAs), laptops or mobile phones may be equipped with a correction system and/or speech recognition. The functionality described by the invention is typically executed using the processor of the device. The processor, such as PC-type processor, micro-controller or DSP-like processor, can be loaded with a program to perform the steps according to the invention. Such a computer program product is usually loaded from a background storage, such as a hard disk or ROM. The computer program product can initially be stored in the background storage after having been distributed on a storage medium, like a CD-ROM, or via a network, like the public internet.

## Claims

1. A correction device (12) for correcting text passages in a recognized text information (RTI) which recognized text information (RTI) is recognized by a speech recognition device from digital speech data (DS) and which is therefore associated to the digital speech data (DS), the correction device (12) comprising:
reception means (13, 14) for receiving the digital speech data (DS) and the associated recognized text information (RTI) and a link information (LI), which link information (LI) at each text passage of the associated recognized text information (RTI) marks the part of the digital speech data (DS) at which the text passage was recognized by the speech recognition device, and a confidence level information (CLI), which confidence level information (CLI) at each text passage of the recognized text information (RTI) represents a correctness of the recognition of said text passage; and
editing means (13) designed to display the recognized text information (RTI) in a text window on a screen (6); and
synchronous playback means (14) for performing a synchronous playback mode, in which synchronous playback mode during an acoustic playback of the digital speech data (DS) the text passage of the recognized text information (RTI) associated to the digital speech data (DS) just played back and marked by the link information (LI) is indicated in said text window by high-lighting; and indication means (16) for indicating the confidence level information (CLI) of the displayed text passage of the recognized text information (RTI) during the synchronous playback,
wherein the confidence level information (CLI) is separately indicated in said text window at a fixed position.

2. A correction device (12) as claimed in claim 1, in which the playback means (14) are constructed to change a playback speed during the acoustic playback in dependence of the confidence level information (CLI).

3. A correction device (12) as claimed in one of the claims 1 to 2, in which the indication means (16) are constructed for indicating the confidence level information (CLI) of phrases.

4. A correction method for correcting text passages in a recognized text information (RTI) which recognized text information (TRI) is recognized by a speech recognition device from a digital speech data (DS) and which is therefore associated to the digital speech data (DS), in which the following steps are performed:
receiving the digital speech data (DS) and the associated recognized text information (RTI) and a link information (LI), which link information (LI) at each text passage of the associated recognized text information (RTI) marks the part of the digital speech data (DS) at which the text passage was recognized by the speech recognition device, and a confidence level information (CLI), which confidence level information (CLI) at each text passage of the recognized text information (RTI) represents a correctness of the recognition of said text passage;
displaying the recognized text information (RTI) in a text window on a screen (6); and performing a synchronous playback mode, in which synchronous playback mode during acoustic playback of the digital speech data (DS) the text passage of the recognized text information (RTI) associated to the digital speech data (DS) just played back and marked by the link information (LI) is indicated in said text window by high-lighting; and
indicating the confidence level information (CLI) of a text passage of the recognized text information (RTI) during the synchronous playback, wherein the confidence level information (CLI) is separately indicated in said text window at a fixed position.
In a text window at a fixed position while the text passage is marked synchronously by the link information.

5. A correction method as claimed in claim 4, in which a change of a playback speed is performed during the acoustic playback in dependence of the confidence level information (CLI).

6. A correction method as claimed in one of the claims 4 to 5, in which at the indicating of the confidence level information (CLI) the indication of the confidence level information (CLI) of phrases is performed.

7. A computer program product for a computer (1a), comprising software code portions for performing the steps of at least one of claims 4 to 6 when said product is run on the computer (la).

8. A computer program product according to claim 7, wherein said computer program product comprises a computer-readable medium on which said software code portions are stored.

## Patentansprüche

1. Korrekturvorrichtung (12) zum Korrigieren von Textstellen in erkannten Textinformationen (RTI), wobei die erkannten Textinformationen (RTI) durch eine Spracherkennungsvorrichtung von digitalen Sprachdaten (DS) erkannt werden, und die dazu mit den digitalen Sprachdaten (DS) assoziiert sind, die Korrekturvorrichtung (12) umfassend:
Empfangsmittel (13, 14) zum Empfangen der digitalen Sprachdaten (DS) und der assoziierten erkannten Textinformationen (RTI) und Link-Informationen (LI), wobei die Link-Informationen (LI) an jeder Textstelle der assoziierten erkannten Textinformationen (RTI) den Teil der digitalen Sprachdaten (DS) markieren, an der die Textstelle durch die Spracherkennungsvorrichtung erkannt wurde, und Konfidenzgradinformationen (CLI), wobei die Konfidenzgradinformationen (CLI) an jeder Textstelle der erkannten Textinformationen (RTI) eine Korrektheit der Erkennung der Textstelle darstellen; und
Bearbeitungsmittel (13), die entwickelt sind, um die erkannten Textinformationen (RTI) in einem Textfenster an einem Bildschirm (6) anzuzeigen; und
synchrone Wiedergabemittel (14) zum Ausführen eines synchronen Wiedergabemodus, wobei in dem synchronen Wiedergabemodus während einer akustischen Wiedergabe der digitalen Sprachdaten (DS) die Textstelle der erkannten Textinformationen (RTI), die mit den gerade wiedergegebenen und durch die Link-Informationen markierten digitalen Sprachdaten (DS) assoziiert ist, in dem Textfenster durch Hervorheben angezeigt wird; und
Anzeigemittel (16) zum Anzeigen der Konfidenzgradinformationen (CLI) der angezeigten Textstelle der erkannten Textinformationen (RTI) während der synchronen Wiedergabe,
wobei die Konfidenzgradinformationen (CLI) separat in dem Textfenster an einer festgelegten Stelle angezeigt werden.

2. Korrekturvorrichtung (12) nach Anspruch 1, wobei die Wiedergabemittel (14) konstruiert sind, um eine Wiedergabegeschwindigkeit während der akustischen Wiedergabe in Abhängigkeit von den Konfidenzgradinformationen (CLI) zu ändern.

3. Korrekturvorrichtung (12) nach einem der Ansprüche 1 bis 2, wobei die Anzeigemittel (16) zum Anzeigen der Konfidenzgradinformationen (CLI) von Sätzen konstruiert sind.

4. Korrekturvorrichtung zum Korrigieren von Textstellen in erkannten Textinformationen (RTI), wobei die erkannten Textinformationen (TRI) durch eine Spracherkennungsvorrichtung von digitalen Sprachdaten (DS) erkannt werden, und die dazu mit den digitalen Sprachdaten (DS) assoziiert sind, wobei die folgenden Schritte ausgeführt werden:
Empfangen der digitalen Sprachdaten (DS) und der assoziierten erkannten Textinformationen (RTI) und von Link-Informationen (LI), wobei die Link-Informationen (LI) an jeder Textstelle der assoziierten erkannten Textinformationen (RTI) den Teil der digitalen Sprachdaten (DS) markieren, an der die Textstelle durch die Spracherkennungsvorrichtung erkannt wurde, und Konfidenzgradinformationen (CLI), wobei die Konfidenzgradinformationen (CLI) an jeder Textstelle der erkannten Textinformationen (RTI) eine Korrektheit der Erkennung der Textstelle darstellen; und
Anzeigen der erkannten Textinformationen (RTI) in einem Textfenster an einem Bildschirm (6) anzuzeigen; und
Ausführen eines synchronen Wiedergabemodus, wobei in dem synchronen Wiedergabemodus während einer akustischen Wiedergabe der digitalen Sprachdaten (DS) die Textstelle der erkannten Textinformationen (RTI), die mit den gerade wiedergegebenen und durch die Link-Informationen (LI) markierten digitalen Sprachdaten (DS) assoziiert ist, in dem Textfenster durch Hervorheben angezeigt wird; und
Anzeigen der Konfidenzgradinformationen (CLI) einer Textstelle der erkannten Textinformationen (RTI) während der synchronen Wiedergabe, wobei die Konfidenzgradinformationen (CLI) separat in dem Textfenster an einer festgelegten Stelle angezeigt werden.

5. Korrekturverfahren nach Anspruch 4, wobei eine Änderung einer Wiedergabegeschwindigkeit während der akustischen Wiedergabe in Abhängigkeit von den Konfidenzgradinformationen (CLI) ausgeführt wird.

6. Korrekturverfahren nach einem der Ansprüche 4 bis 5, wobei beim Anzeigen der Konfidenzgradinformationen (CLI) die Anzeige der Konfidenzgradinformationen (CLI) von Sätzen ausgeführt wird.

7. Computerprogrammprodukt für einen Computer (1a), umfassend Softwarecode-Abschnitte zum Ausführen der Schritte von mindestens einem der Ansprüche 4 bis 6, wenn das Produkt auf dem Computer (1a) ausgeführt wird.

8. Computerprogrammprodukt nach Anspruch 7, wobei das Computerprogrammprodukt ein computerlesbares Medium umfasst, auf dem die Softwarecode-Abschnitte gespeichert sind.

## Revendications

1. Dispositif de correction (12) permettant de corriger des passages de texte dans des informations textuelles reconnues (RTI), lesquelles sont reconnues par un dispositif de reconnaissance de la parole à partir de données vocales numériques (DS) et qui sont ainsi associées aux données vocales numériques (DS), le dispositif de correction (12) comprenant :
des moyens de réception (13, 14) destinés à recevoir les données vocales numériques (DS) et les informations textuelles reconnues (RTI) associées et des informations de liaison (LI), lesquelles à chaque passage de texte des informations textuelles reconnues (RTI) associées signalent la partie des données vocales numériques (DS) au niveau desquelles le passage du texte a été reconnu par le dispositif de reconnaissance de la parole et des informations relatives au niveau de confiance (CLI), lesquelles au niveau de chaque passage de texte des informations textuelles reconnues (RTI) représentent l'exactitude dudit passage de texte ; et
des moyens de correction (13) conçus pour afficher les informations textuelles reconnues (RTI) dans une fenêtre textuelle sur un écran (6) ; et
des moyens de reproduction synchrone (14) destinés à réaliser un mode de reproduction synchrone, dans lequel pendant une reproduction sonore des données vocales numériques (DS) le passage de texte des informations textuelles reconnues (RTI) associées aux données vocales numériques (DS) venant juste d'être reproduites et signalées par les informations de liaison (LI) est indiqué dans ladite fenêtre textuelle par une surbrillance ; et
des moyens d'indication (16) destinées à indiquer les informations relatives au niveau de confiance (CLI) du passage de texte affiché des informations textuelles reconnues (RTI) pendant la reproduction synchrone, les informations relatives au niveau de confiance (CLI) étant indiquées séparément dans ladite fenêtre textuelle à une position fixe.

2. Dispositif de correction (12) tel que revendiqué dans la revendication 1, dans lequel les moyens de reproduction (14) sont conçus pour changer une vitesse de reproduction pendant la reproduction sonore en fonction des informations relatives au niveau de confiance (CLI).

3. Dispositif de correction (12) tel que revendiqué dans l'une des revendications 1 ou 2, dans lequel les moyens d'indication (16) sont conçus pour indiquer les informations relatives au niveau de confiance (CLI) d'expressions.

4. Procédé de correction destiné à corriger des passages de texte dans des informations textuelles reconnues (RTI), lesquelles sont reconnues par un dispositif de reconnaissance de la parole à partir de données vocales numériques (DS) et sont ainsi associées aux données vocales numériques (DS), les étapes suivantes étant réalisées :
la réception des données vocales numériques (DS) et des informations textuelles reconnues (RTI) associées et des informations de liaison (LI), lesquelles, au niveau de chaque passage de texte des informations textuelles reconnues (RTI) associées signalent la partie des données vocales numériques (DS) au niveau de laquelle le passage de texte a été reconnu par le dispositif de reconnaissance de la parole, et des informations relatives au niveau de confiance (CLI), lesquelles, au niveau de chaque passage de texte des informations textuelles reconnues (RTI), représentent une correction de la reconnaissance dudit passage de texte ;
l'affichage des informations textuelles reconnues (RTI) dans une fenêtre textuelle sur un écran (6) ; et
la réalisation d'un mode de reproduction synchrone, dans lequel pendant la reproduction sonore des données vocales numériques (DS), le passage de texte des informations textuelles reconnues (RTI) associées aux données vocales numériques (DS) venant juste d'être reproduites et signalées par les informations de liaison (LI) est indiqué dans ladite fenêtre textuelle par une surbrillance ; et
l'indication des informations relatives au niveau de confiance (CLI) d'un passage de texte des informations textuelles reconnues (RTI) pendant la reproduction synchrone, les informations relatives au niveau de confiance (CLI) étant indiquées séparément dans ladite fenêtre textuelle à une position fixe, dans une fenêtre textuelle à une position fixe tandis que le passage de texte est signalé de manière synchrone par les informations de liaison.

5. Procédé de correction tel que revendiqué dans la revendication 4, dans lequel un changement d'une vitesse de reproduction est effectué pendant la reproduction sonore en fonction des informations relatives au niveau de confiance (CLI).

6. Procédé de correction tel que revendiqué dans l'une des revendications 4 ou 5, dans lequel au niveau de l'indication des informations relatives au niveau de confiance (CLI), l'indication des informations relatives au niveau de confiance (CLI) d'expressions est effectuée.

7. Produit de programme informatique pour un ordinateur (1a), comprenant des parties de code logiciel destinées à réaliser les étapes selon au moins une des revendications 4 à 6, lorsque ledit produit est exécuté sur l'ordinateur (la).

8. Produit de programme informatique selon la revendication 7, ledit produit de programme informatique comprenant un support lisible par ordinateur sur lequel lesdites parties de code logiciel sont stockées.
